# EUROPÄISCHE PATENTSCHRIFT

(11) **EP 1 058 363 B1**
(45) Veröffentlichungstag und Bekanntmachung des Hinweises auf die Patenterteilung: **19.12.2001**
(21) Anmeldenummer: 00250163.3
(22) Anmeldetag: 25.05.2000
(51) Int. Cl.: H02G 5/06, F16L 39/00

(54) **Lösbare Flanschverbindung für den Aussenleiter einer gasisolierten Rohrleiteranlage**
Releasable flange connection for the external conductor of a gas-insulated conductor system
Raccord à brides démontable pour le conducteur externe d'un système de conducteurs tubulaires isolés au gaz

(30) Priorität: 25.05.1999 DE 29909516 U
(43) Veröffentlichungstag der Anmeldung: 06.12.2000
(73) Patentinhaber: SIEMENS AKTIENGESELLSCHAFT, 80333 München (DE)
(72) Erfinder: Kieper, Mario, 14612 Falkensee (DE)

(56) Entgegenhaltungen:
- DE-A- 2 625 252

## Beschreibung

Die Erfindung liegt auf dem Gebiet der Energieübertragung und ist bei der konstruktiven Ausgestaltung einer lösbaren Flanschverbindung anzuwenden, mit der zwei Außenleiterabschnitte einer gasisolierten Rohrleiteranlage miteinander verbunden werden.

Bei der Errichtung von gasisolierten Hochspannungs-Rohrleiteranlagen werden vorgefertigte, aus rohrförmigem Innen- und rohrförmigem Außenleiter bestehende Baugruppen von etwa 10 bis max. 400 m Länge in Gräben abgelegt oder in Tunnel eingezogen, wobei die einzelnen Baugruppen im Bereich des Außenleiters über Flanschverbindungen miteinander verbunden werden. Hierbei werden die Flansche erst nach dem Ablegen einer Baugruppe angeschweißt, um den Vorschub der Baugruppe über Führungsrollen nicht zu behindern. Die Verbindungsflansche, die mittels lösbarer Schrauben verbunden werden, überragen dabei radial die Querschnittsfläche des rohrförmgen Außenleiters (DE 26 25 252 A1, US 4,017,675 A).

Ausgehend von einer Flanschverbindung mit den Merkmalen des Oberbegriffes des Schutzanspruches liegt der Erfindung die Aufgabe zugrunde, die Flanschverbindung so auszugestalten, daß sie mit verringertem Montageaufwand erstellt werden kann.

Zur Lösung dieser Aufgabe ist gemäß der Erfindung vorgesehen, daß die Verbindungsflansche in die Querschnittsfläche der zu verbindenden Außenleiterabschnitte eingesenkt sind, wobei der eine Verbindungsflansch im wesentlichen als verdickter Abschnitt der Rohrwandung und der andere Verbindungsflansch als in einen Ringflansch übergehende Verengung der Rohrwandung ausgebildet ist; dabei sind der verdickte Abschnitt mit Sacklochbohrungen und der Ringflansch mit Durchgangsbohrungen zur Aufnahme der Schrauben versehen.

Eine derartige Ausgestaltung der Verbindungsflansche ermöglicht es, die Flansche schon werksseitig bei der Herstellung der Außenleiterrohre anzuschweißen, was wesentlich einfacher und damit kostengünstiger als in einem Graben oder einem Tunnel durchgeführt werden kann. Da die Flansche in die Querschnittsfläche der Außenleiterabschnitte eingesenkt sind, können sie bei der Verlegung von Baugruppen auch Verlegerollen passieren. Nach dem endgültigen Positionieren der Baugruppen brauchen nur noch die Schraubverbindungen hergestellt zu werden.

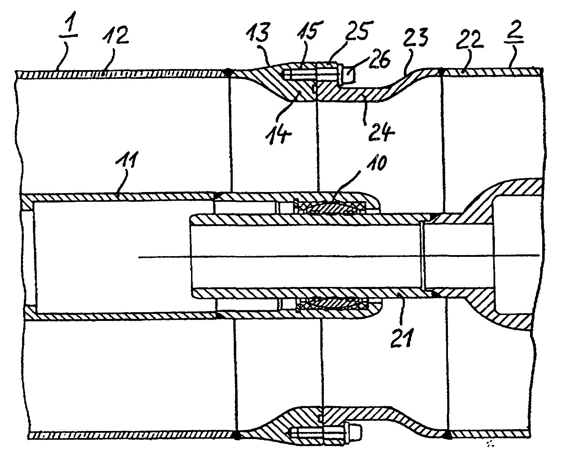

Ein Ausführungsbeispiel einer gemäß der Erfindung ausgebildeten Flanschverbindung ist in der Figur dargestellt.

Die Figur zeigt das eine Ende 1 eines Abschnittes einer gasisolierten Rohrleiteranlage, das über eine Flanschverbindung mit dem einen Ende eines zweiten Abschnittes 2 einer gasisolierten Rohrleiteranlage verbunden ist. Jeder Abschnitt weist einen Innenleiter 11 bzw. 21 auf, die über einen Gleit- und Kugelkontakt 10 steckbar miteinander verbunden sind, sowie einen rohrförmigen Außenleiter 12 bzw. 22. An den Außenleiter 12 ist ein Flansch 13 angeschweißt, der in eine Verdickung 14 übergeht, wobei diese Verdickung in die Querschnittsfläche des rohrförmigen Außenleiters 12 eingesenkt ist. An den Außenleiterabschnitt 22 ist ein Flanschstück 23 angeschweißt, das in eine Verengung 24 mit einem anschließenden Ringflansch 25 übergeht, wobei die Verengung 24 und im wesentlichen auch der Ringflansch 25 ebenfalls in die Querschnittsfläche des Außenleiterabschnittes 22 eingesenkt sind. Zur Verbindung der beiden Flansche ist der Flansch 13 mit einer Sacklochbohrung 15 und der Ringflansch 25 mit einer Durchgangsbohrung versehen, die von einer Schraube 26 durchgriffen wird.

## Patentansprüche

1. Flanschverbindung für zwei Außenleiterabschnitte einer gasisolierten Hochspannungs-Rohrleiteranlage, bestehend aus zwei an die zu verbindenden Enden der beiden Außenleiterabschnitte angeschweißten und mittels Schrauben lösbar miteinander verbundenen Verbindungsflanschen,
**dadurch gekennzeichnet,**
**daß** die Verbindungsflansche (12,23) in die Querschnittsfläche der zu verbindenden Außenleiterabschnitte (1,2) eingesenkt sind,
wobei der eine Verbindungsflansch (12) im wesentlichen als verdickter Abschnitt (14) der Rohrwandung und der andere Verbindungsflansch (23) als in einen Ringflansch (25) übergehende Verengung (24) der Rohrwandung ausgebildet ist
und der verdickte Abschnitt (14) mit Sacklochbohrungen (15) und der Ringflansch (25) mit Durchgangsbohrungen zur Aufnahme der Schrauben (26) versehen ist.

## Claims

1. Flanged connection for two external conductor portions of a gas-insulated tubular conductor system, consisting of two connecting flanges which are welded onto the ends of the two external conductor portions which are to be connected and can be connected together in a releasable manner by means of screws,
**characterised in**
**that** the connecting flanges (12, 23) are sunk into the cross-sectional area of the external conductor portions (1, 2) which are to be connected,
wherein one connecting flange (12) is substantially formed as a thickened portion (14) of the tube wall and the other connecting flange (23) as a contraction (24), which changes into a ring flange (25), of the tube wall, and the thickened portion (14) is provided with blindend bores (15) and the ring flange (25) with throughbores for receiving the screws (26).

## Revendications

1. Raccord à brides pour deux tronçons de conducteur extérieur d'une installation de conducteurs tubulaires à haute tension isolée au gaz, constitué de deux brides de liaison, soudées aux extrémités à relier des deux tronçons de conducteur extérieur et reliées entre elles de manière amovible au moyen de vis, **caractérisé**
**en ce que** les brides (12,23) de liaison sont noyées dans la surface de section transversale des tronçons (1,2) de conducteur extérieur à relier,
l'une des brides (12) de liaison étant constituée sensiblement sous la forme d'un tronçon (14) épaissi de la paroi tubulaire et l'autre bride (23) de liaison sous la forme d'un rétrécissement (24) de la paroi tubulaire, ce rétrécissement se transformant en une bride (25) annulaire
et le tronçon (14) épaissi est muni de trous (15) borgnes, tandis que la bride (25) annulaire est munie de trous traversants destinés à recevoir les vis (26).
